# EUROPEAN PATENT APPLICATION

(11) **EP 1 308 759 A2**
(43) Date of publication of application: **07.05.2003**
(21) Application number: 02024430.7
(22) Date of filing: 29.10.2002
(51) Int. Cl.: G02B 6/293

(54) **Optical interleaver**

(30) Priority: 02.11.2001 JP 2001338237; 25.12.2001 JP 2001392288
(71) Applicant: Sumitomo Electric Industries, Ltd., Osaka-shi, Osaka 541-0041 (JP)
(72) Inventor: Kenmochi, Tamoya, Hashimoto-shi, Wakayama 648-0054 (JP); Suganuma, Hiroshi, Yokohama Works, Sakae-ku, Yokohama-shi Kanagawa 244-8588 (JP); Sano, Tomomi, Yokohama Works, Sakae-ku, Yokohama-shi Kanagawa 244-8588 (JP); Iimura, Tetsuya, Yokohama Works, Sakae-ku, Yokohama-shi Kanagawa 244-8588 (JP)
(74) Representative: HOFFMANN - EITLE

(57) **Abstract**

The light which is input from an optical fiber (1) to a first port (11) is output to an optical path (P₁₁). The light which is input from the optical path to a half mirror (17) is branched into two, and is output to the optical paths (P₁₃,P₁₂). The light which is output to the optical path (P₁₂) reaches to and is reflected from a first reflecting mirror (19), and returns to the half mirror (17) by an optical path (P₁₄). The light which is input to the half mirror by the optical path (P₁₄) is branched into two, and is output to the optical paths (P₁₅,P₁₆). The light which is output to the optical path (P₁₃) reaches to and is reflected from a second reflecting mirror (21), and returns to the half mirror by an optical path (P₁₇). The light which is input to the half mirror by the optical path (P₁₇) is branched into two, and is output to the optical paths (P₁₅,P₁₆). The light which is output to the optical path (P₁₅) is output from a second port (13) to an optical fiber (3), and the light which is output to the optical path (P₁₆) is output from a third port (15) to an optical fiber (5).

## Description

### BACKGROUND OF THE INVENTION

### Cross Reference

This application claims priority to Provisional Application Serial No. 60/367, 785 filed March 28, 2002, which is/are hereby incorporated by reference in its/their entirety.

### Field of the Invention

The present invention relates to an interleaver for separating the wavelengths of light.

### Related Background Art

An interleaver is for inputting a signal light with multiband (λ₁, λ₂, - - - , λ₂ₙ₋₁, λ₂ₙ, - - - ) so as to separate into a signal light with a first wavelength group Λ₁ (λ₁, λ₃, - - - , λ₂ₙ₋₁, - - - ) and a signal light with a second wavelength group Λ₂ (λ₂, λ₄, - - - , λ₂ₙ, - - - ), and is installed in a relay of an optical communication system, for example. For such an interleaver, various types have been proposed, such as one comprised of a polarization separation element, wavelength filter and polarization composing element, or one comprised of an optical system which constitutes a Mach-Zehnder interferometer. An interleaver comprised of an optical system which constitutes a Michelson interferometer is also possible.

However, in the case of the interleaver comprised of an optical system which constitutes a general Michelson interferometer, an input optical axis and one of the output optical axes exist on a same axis, so an optical circulator for branching the input light and the output light is required. This makes the interleaver expensive and makes the optical system in the interleaver complicated.

With the foregoing in view, it is an object of the present invention to solve the above problems, and to provide an interleaver which is inexpensive and with a less complex optical system.

### SUMMARY OF THE INVENTION

An interleaver according to the present invention comprises an optical system having a first port, a second port, a third port, a half mirror, a first reflecting mirror, and a second reflecting mirror, wherein light which reaches from the first port to the half mirror is branched into two, and these lights are output to the first reflecting mirror and the second reflecting mirror respectively, light which is reflected by the first reflecting mirror and reaches the half mirror is branched into two, and these lights are output to the second port and the third port respectively, and light which is reflected by the second reflecting mirror and reaches the half mirror is branched into two, and these lights are output to the second port and the third port respectively.

It is preferable that in the optical system, the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that in the optical system, the input optical axis from the first port to the half mirror and at least one of the output optical axes from the half mirror to the second port and the third port cross with the branching face of the half mirror at a predetermined angle other than 45°, so that the output optical axis from the half mirror to the first reflecting mirror and the reflected optical axis from the first reflecting mirror cross at an angle greater than 0°, and the output optical axis from the half mirror to the second reflecting mirror and the reflected optical axis from the second reflecting mirror cross at a predetermined angle greater than 0°.

It is also preferable that in the optical system, the output optical axis to the first reflecting mirror crosses with the reflecting face of the first reflecting mirror at a predetermined angle other than 90°, and the output optical axis to the second reflecting mirror crosses with the reflecting face of the second reflecting mirror at a predetermined angle other than 90°, so that the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that in the optical system, the input optical axis from the first port to the half mirror and at least one of the output optical axes from the half mirror to the second port and the third port cross with the branching face of the half mirror at a predetermined angle other than 45°, the output optical axis to the first reflecting mirror crosses with the reflecting face of the first reflecting mirror at a predetermined angle other than 90°, and the output optical axis to the second reflecting mirror crosses with the reflecting face of the second reflecting mirror at a predetermined angle other than 90°, so that the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that the interleaver further comprises optical axis correction means for paralleling the input optical axis from the first port and the output optical axis to the second port.

It is also preferable that the optical axis correction means further comprises a prism for converting a state where the input optical axis from the first port and the output optical axis to the second port cross at a predetermined angle into a state where the input optical axis and the output optical axis are parallel.

The present invention will become more fully understood from the detailed description given hereinbelow and the accompanying drawings which are given by way of illustration only, and thus are not to be considered as limiting the present invention.

An interleaver according to the present invention, further comprises a polarization separation element which is installed between the first port of the optical system and the half mirror for separating the light which reaches from the first port into two lights having polarization planes perpendicular to each other, and outputting the separated lights to different optical paths respectively.

It is preferable that the interleaver further comprises a polarization plane paralleling element which is installed between the polarization separation element and the half mirror of the optical system, inputs two lights which are output from the polarization separation element and have the polarization planes perpendicular to each other, parallels the polarization planes of the respective lights, and outputs the paralleled lights to the half mirror respectively.

It is also preferable that the interleaver further comprises a polarization plane orthogonalizing element which is installed between the half mirror and the second port of the optical system, inputs two lights which reach from the half mirror and have polarization planes parallel to each other, orthogonalizes the polarization planes of the respective lights, and outputs the orthogonalized lights to the second port respectively.

It is also preferable that the interleaver further comprises a polarization combining element which is installed between the polarization plane orthogonalizing element and the second port of the optical system, inputs two lights which are output from the polarization plane orthogonalizing element and have the polarization planes perpendicular to each other, combines these two lights, and outputs them to the second port.

It is also preferable that the interleaver further comprises a polarization plane orthogonalizing element which is installed between the half mirror and the third port of the optical system, inputs two lights which reach from the half mirror and have polarization planes parallel to each other, orthogonalizes the polarization planes of the respective light, and outputs the orthogonalized lights to the third port respectively.

It is also preferable that the interleaver further comprises a polarization combining element which is installed between the polarization plane orthogonalizing element and the third port of the optical system, inputs two lights which are output from the polarization plane orthogonalizing element and have the polarization planes perpendicular to each other, combines these two lights, and outputs them to the third port.

It is also preferable that the optical system outputs one of the two lights, which are output from the polarization separation element and have polarization planes perpendicular to each other, to the second port, and outputs the other light to the third port.

An interleaver according to the present invention further comprises a polarization separation element which is installed between the second port of the optical system and the half mirror for separating light which reaches from the half mirror into two lights having polarization planes perpendicular to each other, and outputting one of the separated lights to the second port; and a polarization separation element which is installed between the third port of the optical system and the half mirror for separating light which reaches from the half mirror into two lights having polarization planes perpendicular to each other, and outputting the light having a polarization plane, which is perpendicular to the polarization plane of the light to be output to the second port, to the third port.

It is preferable that in the optical system, the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

Is also preferable that in the optical system, the input optical axis from the first port to the half mirror and at least one of the output optical axes from the half mirror to the second port and the third port cross with the branching face of the half mirror at a predetermined angle other than 45°, so that the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that in the optical system, the output optical axis to the first reflecting mirror crosses with the reflecting face of the first reflecting mirror at a predetermined angle other than 90°, and the output optical axis to the second reflecting mirror crosses with the reflecting face of the second reflecting mirror at a predetermined angle other than 90°, so that the output optical axis from the half mirror to the first reflecting mirror and the reflecting optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that in the optical system, the input optical axis from the first port to the half mirror and at least one of the output optical axes from the half mirror to the second port and the third port cross with the branching face of the half mirror at a predetermined angle other than 45°, the output optical axis to the first reflecting mirror crosses with the reflecting face of the first reflecting mirror at a predetermined angle other than 90°, and the output optical axis to the second reflecting mirror crosses with the reflecting face of the second reflecting mirror at a predetermined angle other than 90°, so that the output optical axis from the half mirror to the first reflecting mirror and the reflected optical axis from the first reflecting mirror cross at a predetermined angle greater than 0°, and the output optical axis from the half mirror to the second reflecting mirror and the reflected optical axis from the second reflecting mirror cross at a predetermined angle greater than 0°.

It is also preferable that the interleaver further comprises optical axis correction means for paralleling the input optical axis from the first port and the output optical axis to the second port.

It is also preferable that the optical axis correction means further comprises a prism for converting a state where the input optical axis from the first port and the output axis to the second port cross at a predetermined angle into a state where the input optical axis and the output optical axis are parallel.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWING

Fig. 1 is a block diagram depicting the interleaver according to the first embodiment;
Fig. 2 is a block diagram depicting the interleaver according to the second embodiment;
Figs. 3A and 3B are block diagrams depicting the interleaver according to the third embodiment;
Figs. 4A and 4B are block diagrams depicting the interleaver according to the fourth embodiment;
Figs. 5A and 5B are block diagrams depicting the interleaver according to the fifth embodiment; and
Fig. 6 is a block diagram depicting the interleaver according to the sixth embodiment.

### DESCRIPTION OF THE PREFERRED EMBODIMENT

Inter-leavers according to the embodiments of the present invention will now be described with reference to the accompanying drawings. In the following descriptions, the same elements or elements having the same function are denoted by the same symbols, where redundant descriptions are omitted.

### (First Embodiment)

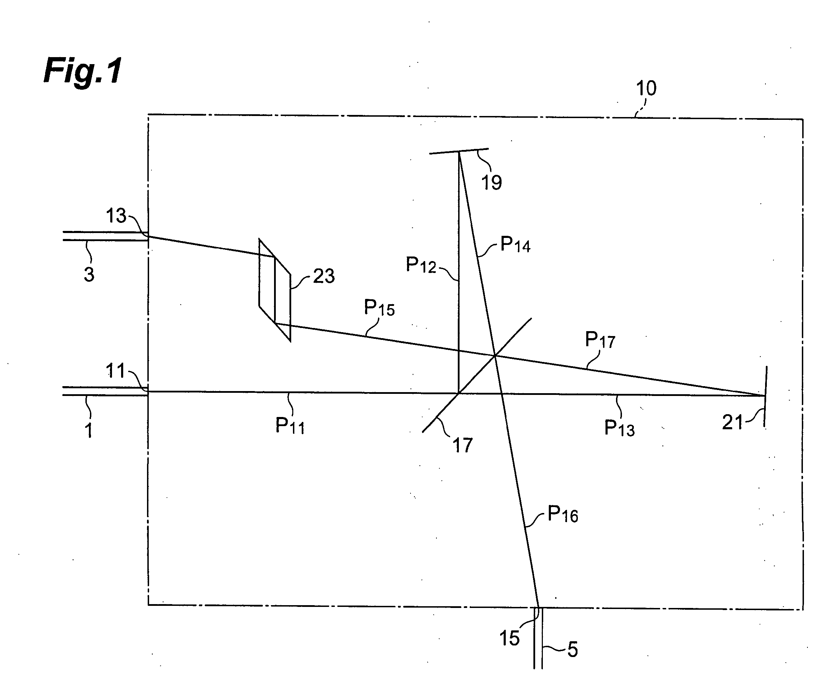

An interleaver according to the first embodiment of the present invention will be described first. Fig. 1 is a block diagram depicting the interleaver 10 according to the present embodiment.

The interleaver 10 is comprised of a first port 11, second port 13, third port 15, half mirror 17, first reflecting mirror (total reflection mirror) 19, second reflecting mirror (total reflection mirror) 21, and a branching prism 23. The optical system, including the first port 11, second port 13, third port 15, half mirror 17, first reflecting mirror 19 and second reflecting mirror 21, constitutes a Michelson interferometer. In other words, the half mirror 17 branches light, which reaches from the first port 11, into two, then outputs one light to the first reflecting mirror 19 and the other light to the second reflecting mirror 21. The half mirror 17 also branches the light, which is reflected by the first reflecting mirror 19 and reaches the half mirror 17, into two, then outputs one light to the second port 13 and the other light to the third port 15. The half mirror 17 also branches light, which is reflected by the second reflecting mirror 21 and reaches the half mirror 17, into two, then outputs one light to the second port 13 and the other light to the third port 15.

The branching prism 23 is installed between the half mirror 17 and the second port 13, and outputs the light from the half mirror 17 to the second port 13 in a state where the space between the input optical axis from the first port 11 and the output optical axis to the second port 13 is spread.

In the optical system constituting the above mentioned Michelson interferometer, the optical axis from the half mirror 17 to the first reflecting mirror 19 (optical axis of the optical path P₁₂) and the reflected optical axis from the first reflecting mirror 19 (optical axis of the optical path P₁₄) cross at a predetermined angle greater than 0° (e.g. 0.8°), and the output optical axis from the half mirror 17 to the second reflecting mirror 21 (optical axis of the optical path P₁₃) and the reflected optical axis from the second reflecting mirror 21 (optical axis of the optical path P₁₇) cross at a predetermined angle greater than 0° (e.g. 0.8°), so that the input optical axis from the first port 11 and the output optical axis to the second port 13 are different when light is output to the second port 13.

And in the optical system constituting the above mentioned Michelson interferometer, in order to cross the output optical axis from the half mirror 17 to the first reflecting mirror 19 (optical axis of the optical path P₁₂) and the reflected optical axis from the first reflecting mirror 19 (optical axis of the optical path P₁₄) at the above mentioned predetermined angle, the output optical axis to the first reflecting mirror 19 (optical axis of the optical path P₁₂) is set so as to cross with the reflecting face of the first reflecting mirror 19 at a predetermined angle other than 90° (e.g. 89.6°). In the same way, in order to cross the output optical axis from the half mirror 17 to the second reflecting mirror 21 (optical axis of the optical path P₁₃) and the reflected optical axis from the second reflecting mirror 21 (optical axis of the optical path P₁₇) at the above mentioned predetermined angle, the output optical axis to the second reflecting mirror 21 (optical axis of the optical path P₁₃) is set so as to cross with the reflecting face of the second reflecting mirror 21 at a predetermined angle other than 90° (e.g. 89.6°).

Also in the optical system constituting the above mentioned Michelson interferometer, the output optical axes from the half mirror 17 to the second port 13 and to the third port 15 (optical axes of the optical paths P₁₅ and P₁₆) are set so as to cross with the branching face of the half mirror 17 at a predetermined angle other than 45° (e.g. 44.2°). The input optical axis from the first port 11 to the half mirror 17 (optical axis of the optical path P₁₁) is set so as to cross with the branching face of the half mirror 17 at 45°.

The output optical axes from the half mirror 17 to the second port 13 and to the third port 15 (optical axes of the optical paths P₁₅ and P₁₆) may be set so as to cross with the half mirror 17 at 45°, and the input optical axis from the first port 11 to the half mirror 17 (optical axis of the optical path P₁₁) maybe set so as to cross with the branching face of the half mirror 17 at the above mentioned predetermined angle other than 45°. Also the input optical axis from the first port 11 to the half mirror 17 (optical axis of the optical path P₁₁) and the output optical axes from the half mirror 17 to the second port 13 and to the third port 15 (optical axes of the optical paths P₁₅ and P₁₆) may be set so as to cross with the branching face of the half mirror 17 at a predetermined angle other than 45° respectively.

The light which is input to the half mirror 17 by the optical path P₁₁ is branched into two by the half mirror 17, then one light is output to the optical path P₁₂ and the other light is output to the optical path P₁₃. The light which is output from the half mirror 17 to the optical path P₁₂ is reflected by the first reflecting mirror 19, advances on the optical path P₁₄ to return to the half mirror 17, is branched into two by the half mirror 17, then one light is output to the optical path P₁₅ and the other light is output to the optical path P₁₆. The light which is output from the half mirror 17 to the optical path P₁₃ is reflected by the second reflecting mirror 21, advances on the optical path P₁₇ to return to the half mirror 17, is branched into two by the half mirror 17, then one light is output to the optical path P₁₅ and the other light is output to the optical path P₁₆.

This interleaver 10 operates as follows. The light which is input to the first port 11 by the optical fiber 1 is output to the optical path P₁₁. And the light which is input to the half mirror 17 by the optical path P₁₁ is branched into two by the half mirror 17, and is output to the optical paths P₁₂ and P₁₃. The light which is output to the optical path P₁₂ reaches to and is reflected back from the first reflecting mirror 19, and returns to the half mirror 17 by the optical path P₁₄. The light which is input to the half mirror 17 by the optical path P₁₄ is branched into two by the half mirror 17, and is output to the optical paths P₁₅ and P₁₆. The light which is output to the optical path P₁₃ reaches to and is reflected back from the second reflecting mirror 21, and returns to the half mirror 17 by the optical path P₁₇. The light which is input to the half mirror 17 by the optical path P₁₇ is branched into two by the half mirror 17, and is output to the optical paths P₁₅ and P₁₆.

The light which is output from the half mirror 17 to the optical path P₁₅ is light where lights which reach the half mirror 17 by the optical path P₁₄ and the optical path P₁₇ respectively are partially super-imposed, and is output to the optical fiber 3 in a state where the space from the optical path P₁₁ (input optical axis) is spread by the branching prism 23. The light which is output from the half mirror 17 to the optical path P₁₆ is also light where lights which reach the half mirror 17 by the optical path P₁₄ and the optical path P₁₇ respectively are partially super-imposed, and is output to the optical fiber 5.

In this interleaver 10, the Michelson interferometer, comprised of the optical system which includes the first port 11, second port 13, third port 15, half mirror 17, first reflecting mirror 19 and second reflecting mirror 21, has a transmission characteristic with a cycle according to the optical path length difference of the two optical paths. Therefore this interleaver 10 can input a signal light with multiband (λ₁, λ₂, - - - , λ₂ₙ₋₁, λ₂ₙ, - - - ) from the optical fiber 1, output the signal light with the first wavelength group Λ₁ (λ₁, λ₃, - - - , λ₂ₙ₋₁, - - - ) to the optical fiber 3, and output the signal light with the second wavelength group Λ₂ (λ₂, λ₄, - - - λ₂ₙ, - - - ) to the optical fiber 5. Here λ₁<λ₂< - - - <λ₂ₙ₋₁<λ₂ₙ< - - - .

The light which is input from the first port 11 is output to the second port 13 and to the third port 15 by the half mirror 17 and by the reflecting mirrors 19 and 21, included in the optical system which constitutes the Michelson interferometer, as mentioned above. Therefore it is possible to implement the interleaver 10 comprised of an optical system which does not need an optical circulator, so the interleaver 10 which is inexpensive, and with a less complex optical system is provided.

### (Second Embodiment)

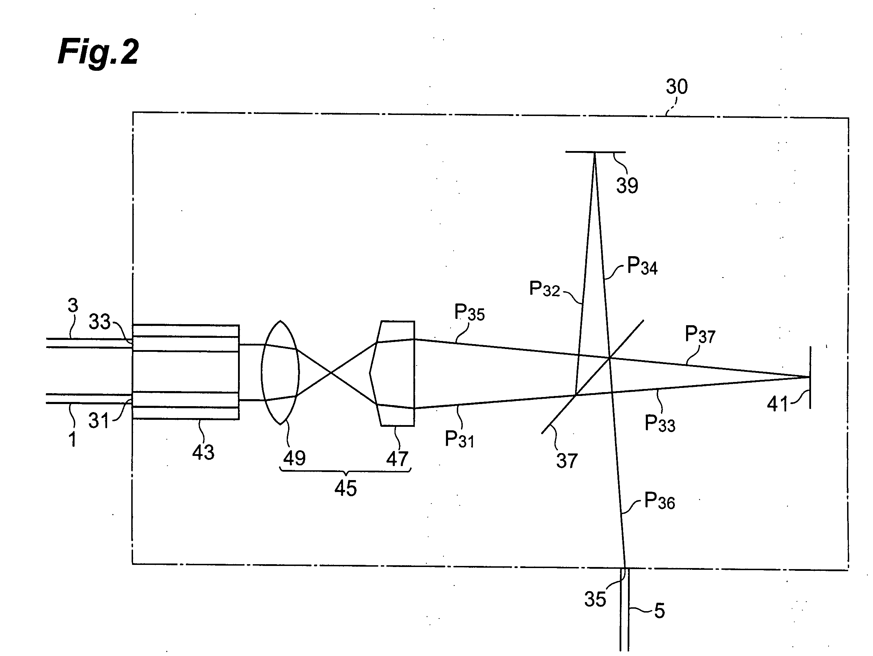

An interleaver according to the second embodiment of the present invention will now be described. Fig. 2 is a block diagram depicting the interleaver 30 according to the present embodiment.

The interleaver 30 is comprised of a first port 31, second port 33, third port 35, half mirror 37, first reflecting mirror (total reflection mirror) 39, second reflecting mirror (total reflection mirror 41), dual collimator 43, and an optical axis correction section 45 (optical axis correction means). The optical system, including the first port 31, second port 33, third port 35, half mirror 37, first reflecting mirror 39, and second reflecting mirror 41, constitute a Michelson interferometer. In other words, the half mirror 37 branches light, which reaches from the first port 31, into two, then outputs one light to the first reflecting mirror 39 and outputs the other light to the second reflecting mirror 41. The half mirror 37 also branches the light, which is reflected by the first reflecting mirror 39 and reaches the half mirror 37, into two, then outputs one light to the second port 33 and outputs the other light to the third port 35. The half mirror 37 branches the light, which is reflected by the second reflecting mirror 41 and reaches the half mirror 37, into two, then outputs one light to the second port 33 and outputs the other light to the third port 35.

The first port 31 and the second port 33 are positioned at one end of the duel collimator 43. The optical axis correction section 45 is installed between the other end of the dual collimator 43 and the half mirror 37. This optical axis correction section 45 parallels the light which is output from the other end of the dual collimator 43 (input optical axis from the first port 31) and the light which is input to the other end of the dual collimator 43 (output optical axis to the second port 33), and includes a prism 47 and lens 49. The prism 47 and lens 49 are installed in the sequence of lens 49 and prism 47 viewed from the dual collimator 43 side.

The prism 47 is for converting a state where the light, which is output from the other end of the dual collimator 43, and the light, which is input to the other end of the dual collimator 43, cross at a predetermined angle (e.g. 0.8°) into a state where the output light and the input light are parallel.

In the optical system constituting the above mentioned Michelson interferometer, the output optical axis from the half mirror 37 to the first reflecting mirror 39 (optical axis of the optical path P₃₂) and the reflected optical axis from the first reflecting mirror 39 (optical axis of the optical path P₃₄) cross at a predetermined angle greater than 0° (e.g. 0.8°), and the output optical axis from the half mirror 37 to the second reflecting mirror 41 (optical axis of the optical path P₃₃) and the reflected optical axis from the second reflecting mirror 41 (optical axis of the optical path P₃₇) cross at a predetermined angle greater than 0° (e.g. 0.8°), so that the input optical axis from the first port 31 and the output optical axis to the second port 33 become different when light is output to the second port 33.

And in the optical system constituting the above mentioned Michelson interferometer, in order to cross the output optical axis from the first mirror 37 to the first reflecting mirror 39 (optical axis of the optical path P₃₂) and the reflected optical axis from the first reflecting mirror 39 (optical axis of the optical path P₃₄) at the above mentioned predetermined angle, the output optical axis to the first reflecting mirror 39 (optical axis of the optical path P₃₂) is set so as to cross with the reflecting face of the first reflecting mirror 39 at a predetermined angle other than 90° (e.g. 89.6°). In the same way, in order to cross the output optical axis from the half mirror 37 to the second reflecting mirror 41 (optical axis of the optical path P₃₃) and the reflected optical axis from the second reflecting mirror 41 (optical axis of the optical path P₃₇) at the above mentioned predetermined angle, the output optical axis to the second reflecting mirror 41 (optical axis of the optical path P₃₃) is set so as to cross with the reflecting face of the second reflecting mirror 41 at a predetermined angle other than 90° (e.g. 89.6°).

Also in the optical system constituting the above mentioned Michelson interferometer, the input optical axis from the first port 31 to the half mirror 37 (optical axis of the optical path P₃₁) is set so as to cross with the branching face of the half mirror 37 at a predetermined angle other than 45° (e.g. 44.6°), and the output optical axes from the half mirror 37 to the second port 33 and to the third port 35 (optical axes of the optical paths P₃₅ and P₃₆) are set so as to cross with the branching face of the half mirror 37 at a predetermined angle other than 45° (e.g. 44.6°).

The output optical axes from the half mirror 37 to the second port 33 and to the third port 35 (optical axes of the optical paths P₃₅ and P₃₆) may be set so as to cross the half mirror 37 at 45°, and the input optical axis from the first port 31 to the half mirror 37 (optical axis of the optical path P₃₁) may be set so as to cross with the branching face of the half mirror 37 at a predetermined angle other than 45°. Also the input optical axis from the first port 31 to the half mirror 37 (optical axis of the optical path P₃₁) may be set so as to cross with the half mirror 37 at 45°, and the output axes from the half mirror 37 to the second port 33 and to the third port 35 (optical axes of the optical paths P₃₅ and P₃₆) may be set so as to cross with the branching face of the half mirror 37 at a predetermined angle other than 45° respectively.

The light which is input to the half mirror 37 by the optical path P₃₁ is branched into two by the half mirror 37, then one light is output to the optical path P₃₂ and the other light is output to the optical path P₃₃. The light which is output from the half mirror 37 to the optical path P₃₂ is reflected by the first reflecting mirror 39, advances on the optical path P₃₄ to return to the half mirror 37, is branched into two by the half mirror 37, then one light is output to the optical path P₃₅, and the other light is output to the optical path P₃₆. The light which is output from the half mirror 37 to the optical path P₃₃ is reflected by the second reflecting mirror 41, advances on the optical path P₃₇ to return to the half mirror 37, is branched into two by the half mirror 37, then one light is output to the optical path P₃₅, and the other light is output to the optical path P₃₆.

The interleaver 30 operates as follows. The light which is input to the first port 31 by the optical fiber 1 is output to the optical path P₃₁ via the dual collimator 43 and the optical axis correction section 45 (lens 49 and prism 47). The light which is input to the half mirror 37 by the optical path P₃₁ is branched into two by the half mirror 37, and is output to the optical paths P₃₂ and P₃₃. The light which is output to the optical path P₃₂ reaches to and is reflected back from the first reflecting mirror 39, and returns to the half mirror 37 by the optical path P₃₄. The light which is input to the half mirror 37 by the optical path P₃₄ is branched into two by the half mirror 37, and is output to the optical paths P₃₅ and P₃₆. The light which is output to the optical path P₃₃ reaches to and is reflected back from the second reflecting light 41, and returns to the half mirror 37 by the optical path P₃₇. The light which is input to the half mirror 37 by the optical path P₃₇ is branched into two by the half mirror 37, and is output to the optical paths P₃₅ and P₃₆.

The light which is output from the half mirror 37 to the optical path P₃₅ is light where lights which reach the half mirror 37 by the optical path P₃₄ and the optical path P₃₇ respectively are partially super-imposed, and is output to the optical fiber 3 via the optical axis correction section 45 and the dual collimator 43. The light which is output from the half mirror 37 to the optical path P₃₆ is also light where lights which reach the half mirror 37 by the optical path P₃₄ and the optical path P₃₇ respectively are partially super-imposed, and is output to the optical fiber 5.

In this interleaver 30, the Michelson interferometer comprised of the optical system, which includes the first port 31, second port 33, third port 35, and half mirror 37, first reflecting mirror 39 and second reflecting mirror 41, has a transmission characteristic with a cycle according to the optical path length difference of the two optical paths. Therefore this interleaver 30 can input the signal light with multiband (λ₁, λ₂, - - - , λ₂ₙ₋₁, λ₂ₙ, - - - ) by the optical fiber, separate the signal light, output the signal light with the first wavelength group Λ₁ (λ₁, λ₃, - - - , λ₂ₙ₋₁, - - - ) to the optical fiber, and output the signal light with the second wavelength group Λ₂ (λ₂, λ₄, - - - , λ₂ₙ, - - - ) to the optical fiber. Here λ₁<λ₂< - - - <λ₂ₙ₋₁<λ₂ₙ<

The light which is input from the first port 31 is output to the second port 33 and the third port 35 by the half mirror 37 and the reflecting mirrors 39 and 41, which are included in the optical system constituting the Michelson interferometer, as mentioned above. Therefore it is possible to implement the interleaver 30 comprised of an optical system which does not need an optical circulator, so the interleaver 30 is which inexpensive, and with a less complex optical system is provided.

Also the input optical axis from the first port 31 and the output optical axis to the second port 33 are paralleled by the optical axis correction section 45, so the occurrence of the loss of light which is input from the optical fiber 1 to the first port 31 and the light which is output from the second port 33 to the optical fiber 3 can be controlled.

The present invention is not limited by the above embodiments, but various modifications are possible. For example, in the above mentioned embodiments, a Gires-Tournois resonator, which includes a semi-transparent mirror, which transmittance is several tens %, and a total reflection mirror, may be used as one reflecting mirror.

### (third Embodiment)

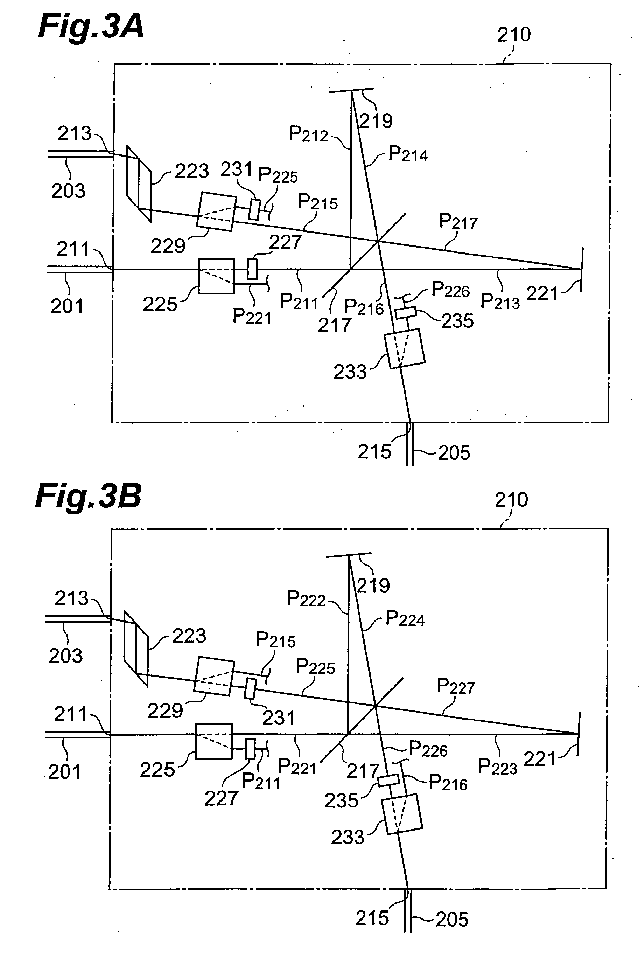

Figs. 3A and 3B are block diagrams depicting the interleaver 10 according to the present embodiment. The optical system (optical path) shown in Fig. 3A and the optical system (optical path) shown in Fig. 3B are positioned at the top and bottom of each other in a direction vertical to the page face.

The interleaver 210 is comprised of a first port 211, second port 213, third port 215, half mirror 217, first reflecting mirror (total reflection mirror) 219, second reflecting mirror (total reflection mirror) 221, branching prism 223, polarization separation element 225, wavelength plate 227, polarization combining element 229, wavelength plate 231, polarization combining element 233, and a wavelength plate 235. The optical system, including the first port 211, second port 213, third port 215, half mirror 217, first reflecting mirror 219 and the second reflecting mirror 221, constitutes a Michelson interferometer. In other words, the half mirror 217 branches light, which reaches from the first port 211, into two, then outputs one light to the first reflecting mirror 219, and the other light to the second reflecting mirror 221. The half mirror 217 also branches the light, which is reflected by the first reflecting mirror 219 and reaches the half mirror 217, into two, then outputs one light to the second port 213, and the other light to the third port 215. The half mirror 217 also branches light, which is reflected by the second reflecting mirror and reaches the half mirror 217, into two, then outputs one light to the second port 213, and the other light to the third port 215.

The branching prism 223 is installed between the half mirror 217 and the second port 213, and outputs the light from the half mirror 217 to the second port 213 in a state where the space between the input optical axis from the first port 211 and the output optical axis to the second port 213 is spread.

The polarization separation element 225 is comprised of a double refraction material installed between the first port 211 and the half mirror 217, separates the light which reaches from the first port 211 into two lights having polarization planes perpendicular to each other, then outputs one light, that is light with the first polarization component, to the optical path P₂₁₁, and outputs the other light, that is light with the second polarization component, which is perpendicular to the light with the first polarization component, to the optical path P₂₂₁. The optical path P₂₁₁ and the optical path P₂₂₁ are positioned at the top and bottom of each other in a direction vertical to the page face in Fig. 3A and 3B.

The wavelength plate (polarization plane paralleling element) 227 is installed on the optical path P₂₁₁ between the polarization separation element 225 and the half mirror 217, rotates the polarization plane of light with the first polarization component, which is output from the polarization separation element 225 to the optical path P₂₁₁, by 90°, and outputs this light as the light with the second polarization component. In other words, this wavelength plate 227 parallels the polarization planes of the two lights having polarization planes perpendicular to each other, which are output from the polarization separation element 225 to the optical paths P₂₁₁ and P₂₂₁, and outputs these parallel lights to the half mirror 217 respectively.

As Fig. 3A shows, the light which is input to the half mirror 217 by the optical path P₂₁₁ is branched into two by the half mirror 217, then one light is output to the optical path P₂₁₂, and the other light is output to the optical path P₂₁₃. The light which is output from the half mirror 217 to the optical path P₂₁₂ is reflected by the first reflecting mirror 219, advances on the optical path P₂₁₄ to return to the half mirror 217, is branched into two by the half mirror 217, then one light is output to the optical path P₂₁₅, and the other light is output to the optical path P₂₁₆. The light which is output from the half mirror 217 to the optical path P₂₁₃ is reflected by the second reflecting mirror 221, advances on the optical path P₂₁₇ to return to the half mirror 217, is branched into two by the half mirror 217, then one light is output to the optical path P₂₁₅, and the other light is output to the optical path P₂₁₆. During this propagation, the light remains as light with the second polarization component.

As Fig. 3B shows, the light which is input to the half mirror 217 by the optical path P₂₂₁ is branched into two by the half mirror 217, then one light is output to the optical path P₂₂₂, and the other light is output to the optical path P₂₂₃. The light which is output from the half mirror 217 to the optical path P₂₂₂ is reflected by the first reflecting mirror 219, advances on the optical path P₂₂₄ to return to the half mirror 217, is branched into two by the half mirror 217, then one light is output to the optical path P₂₂₅, and the other light is output to the optical path P₂₂₆. The light which is output from the half mirror 217 to the optical path P₂₃ is reflected by the second reflecting mirror 221, advances on the optical path P₂₂₇ to return to the half mirror 217, is branched into two by the half mirror 217, then one light is output to the optical path P₂₂₅, and the other light is output to the optical path P₂₂₆. During this propagation, the light remains as light with the second polarization component.

The wavelength plate (polarization plane orthogonalizing element) 231 is installed on the optical path P₂₂₅ between the half mirror 217 and the second port 213, rotates the polarization plane of the light with the second polarization component, which is output from the half mirror 217 to the optical path P₂₂₅, by 90°, and outputs this light as light with the first polarization component. In other words, this wavelength plate 231 inputs the two lights having polarization planes parallel to each other, which are output from the half mirror 217 to the optical paths P₂₁₅ and P₂₂₅, orthogonalizes the polarization planes of each light, and outputs these orthogonalizing lights to the second port 213 respectively.

The polarization combining element 229 is comprised of a double refraction material installed between the wavelength plate 231 and the second port 213, inputs the two lights having polarization planes which are orthogonalized by the wavelength plate 231, combines the polarization of these lights, and outputs this light to the second port 213.

The wavelength plate (polarization plane orthogonalizing element) 235 is installed on the optical path P₂₂₆ between the half mirror 217 and the third port 215, rotates the polarization plane of the light with the second polarization component, which is output from the half mirror 217 to the optical path P₂₂₆, by 90°, and outputs this light as light with the first polarization component. In other words, this wavelength plate 235 inputs the two lights having polarization planes parallel to each other, which are output from the half mirror 217 to the optical paths P₂₁₆ and P₂₂₆, orthogonalizes the polarization planes of each light, and outputs these orthogonalized lights to the third port 215 respectively.

The polarization combining element 233 is comprised of a double refraction material installed between the wavelength plate 235 and the third port 215, inputs the two lights having polarization planes, which are orthogonalized by the wavelength plate 235, combines the polarization of these lights, and outputs this light to the third port 215.

In each optical system constituting the above mentioned Michelson interferometer, the output optical axes from the half mirror 217 to the first reflecting mirror 219 (optical axis of the optical path P₂₁₂ and optical axis of the optical path P₂₂₂) and the reflected optical axes from the first reflecting mirror 219 (optical axis of the optical path P₂₁₄ and optical axis of the optical path P₂₂₄) cross at a predetermined angle greater than 0°, (e.g. 0.3°), and the optical axes from the half mirror 217 to the second reflecting mirror 221 (optical axis of the optical path P₂₁₃ and optical axis of the optical path P₂₂₃) and the reflected optical axes from the second reflecting mirror 221 (optical axis of the optical path P₂₁₇ and optical axis of the optical path P₂₂₇) cross at a predetermined angle greater than 0° (e.g. 0.3°), so that the input optical axis from the first port 211 and the output optical axis to the second port 213 become different when the light is output to the second port 213.

And in each optical system constituting the above mentioned Michelson interferometer, in order to cross the output optical axes from the half mirror 217 to the first reflecting mirror 219 (optical axis of the optical path P₂₁₂ and optical axis of the optical path P₂₂₂) and the reflected optical axes from the first reflecting mirror 219 (optical axis of the optical path P₂₁₄ and optical axis of the optical path P₂₂₄) at the above mentioned predetermined angle, the output optical axes to the first reflecting mirror 219 (optical axis of the optical path P₂₁₂ and optical axis of the optical path P₂₂₂) are set so as to cross with the reflecting face of the first reflecting mirror 219 at a predetermined angle other than 90 (e.g. 89.7°). In the same way, in order to cross the output optical axes from the half mirror 217 to the second reflecting mirror 221 (optical axis of the optical path P₂₁₃ and optical axis of the optical path P₂₂₃) and the reflected optical axes from the second reflecting mirror 221 (optical axis of the optical path P₂₁₇ and optical axis of the optical path P₂₂₇) at the above mentioned predetermined angle, the output optical axes to the second reflecting mirror 221 (optical axis of the optical path P₂₁₃ and optical axis of the optical path P₂₂₃) are set so as to cross with the reflecting face of the second reflecting mirror 221 at a predetermined angle other than 90° (e.g. 89.7°).

Also in each optical system constituting the above mentioned Michelson interferometer, the output optical axes from the half mirror 217 to the second port 213 and the third port 215 (optical axes of the optical paths P₂₁₅ and P₂₁₆ and optical axes of the optical paths P₂₂₅ and P₂₂₆) are set so as to cross with the branching face of the half mirror 217 at a predetermined angle other than 45° (e.g. 44.7°). The input optical axes from the first port 211 to the half mirror 217 (optical axes of the optical path P₂₁₁ and optical axis of the optical path P₂₂₁) are set so as to cross with the branching face of the half mirror 217 at 45°.

The output optical axes from the half mirror 217 to the second port 213 and the third port 215 (optical axes of the optical paths P₂₁₅ and P₂₁₆ and optical axes of the optical paths P₂₂₅ and P₂₂₆) may be set so as to cross with the half mirror 217 at 45°, and the input optical axes from the first port 211 to the half mirror 217 (optical axis of the optical path P₂₁₁ and optical axis of the optical path P₂₂₁) may be set so as to cross with the branching face of the half mirror 217 at the above mentioned predetermined angle other than 45°. Also the input optical axes from the first port 211 to the half mirror 217 (optical axis of the optical path P₂₁₁ and optical axis of the optical path P₂₂₁) and the output optical axes from the half mirror 17 to the second port 213 and the third port 215 (optical axes of the optical paths P₂₁₅ and P₂₁₆ and optical axes of the optical paths P₂₂₅ and P₂₂₆) may be set so as to cross with the branching face of the half mirror 217 at a predetermined angle other than 45° respectively.

This interleaver 210 operates as follows. The light which is input from the optical fiber 201 to the first port 211 is polarization-separated by the polarization separation element 225, then light with the first polarization component is output to the optical path P₂₁₁, and light with the second polarization component is output to the optical path P₂₂₁. The light with the first polarization component, which is output from the polarization separation element 225 to the optical path P₂₁₁, is converted into the light with the second polarization component by the wavelength plate 227.

The light which is input from the optical path P₂₁₁ to the half mirror 217 is branched into two by the half mirror 217, and is output to the optical paths P₂₁₂ and P₂₁₃. The light, which is output to the optical path P₂₁₂, reaches to and is reflected from the first reflecting mirror 219, and returns to the half mirror 217 by the optical path P₂₁₄. The light which is input to the half mirror 217 by the optical path P₂₁₄ is branched into two by the half mirror 217, and is output to the optical paths P₂₁₅ and P₂₁₆. The light which is output to the optical path P₂₁₃ reaches to and is reflected by the second reflecting mirror 221, and returns to the half mirror 217 by the optical path P₂₁₇. The light which is input to the half mirror 217 by the optical path P₂₁₇ is branched into two by the half mirror 217, and is output to the optical paths P₂₁₅ and P₂₁₆. During this propagation, the lights remains as the light with the second polarization component.

The light which is input to the half mirror 217 by the optical path P₂₂₁ is branched into two by the half mirror 217, and is output to the optical paths P₂₂₂ and P₂₂₃. The light which is output to the optical path P₂₂₂ reaches to and is reflected from the first reflecting mirror 219, and returns to the half mirror 217 by the optical path P₂₂₄. The light which is input to the half mirror 217 by the optical path P₂₂₄ is branched into two by the half mirror 217, and is output to the optical paths P₂₂₅ and P₂₂₆. The light which is output to the optical path P₂₂₃ reaches to and is reflected from the second reflecting mirror 221, and returns to the half mirror 217 by the optical path P₂₂₇. The light which is input to the half mirror 217 by the optical path P₂₂₇ is branched into two by the half mirror 217, and is output to the optical paths P₂₂₅ and P₂₂₆. During this propagation, the light remains as light with the second polarization component.

The light with the secondpolarization component, which is output from the half mirror 217 to the optical path P₂₁₅, is light where lights which reach the half mirror 217 by the optical path P₂₁₄ and optical path P₂₁₇ respectively are partially super-imposed. The light with the second polarization component, which is output from the half mirror 217 to the optical path P₂₂₅, is light where lights which reach the half mirror 217 from the optical path P₂₂₄ and optical path P₂₂₇ respectively are partially super-imposed. The light with the second polarization component, which is output from the half mirror 217 to the optical path P₂₂₅, is converted into the light with the first polarization component by the wavelength plate 231. The light on the optical path P₂₂₅ which is converted into the light with the first polarization component by the wavelength plate 231 and the light with the second polarization component, which is output from the half mirror 217 to the optical path P₂₁₅, are polarization-combined by the polarization combining element 229. This light, after the polarization combining, is output to the optical fiber 203 in a state where the space from the optical path P₂₁₁ (input optical axis) is spread by the branching prism 223.

The light with the second polarization component, which is output from the half mirror 217 to the optical path P₂₁₆, is light where lights which reach the half mirror 217 by the optical path P₂₁₄ and optical path P₂₁₇ respectively are partially super-imposed. The light with the second polarization component, which is output from the half mirror 217 to the optical path P₂₂₆, is light where lights which reach the half mirror 217 by the optical path P₂₂₄ and optical path P₂₂₇ respectively are partially super-imposed. The light with the second polarization component, which is output from the half mirror 217 to the optical path P₂₂₆, is converted into light with the first polarization component by the wavelength plate 235. And the light on the optical path P₂₂₆ which is converted into light with the first polarization component by the wavelength plate 235 and the light with the second polarization component, which is output from the half mirror 217 to the optical path P₂₁₆, are polarization-combined by the polarization combining element 233. This light, after the polarization-combining, is output to the optical fiber 205.

In this interleaver 210, the Michelson interferometer comprised of the optical system, which includes the first port 211, second port 213, third port 215, half mirror 217, first reflecting mirror 219 and the second reflecting mirror 221, has a transmission characteristic with a cycle according to the optical path length difference of the two optical paths. Therefore this interleaver 210 can input the signal light with multiband (λ₁, λ₂, - - - , λ₂ₙ₋₁, λ₂ₙ, - - - ) by the optical fiber 201, separate the signal light, output the signal light with the first wavelength group Λ₁ (λ₁, λ₃, - - - , λ₂ₙ₋₁, - - - ) to the optical fiber 203, and output the signal light with the second wavelength group Λ₂ (λ₂, λ₄, - - - , λ₂ₙ, - - - ) to the optical fiber 205. Here λ₁<λ₂< - - - <λ₂ₙ₋₁<λ₂ₙ< - - - .

The polarization state of the light when entering the half mirror 217, first reflecting mirror 219 and the second reflecting mirror 221 respectively, is constant, regardless the polarization state of the light which is input by the optical fiber 201. Therefore the transmission characteristic of light in the first wavelength area Λ₁ from the optical fiber 201 to the optical fiber 203, and the transmission characteristic of light in the second wavelength area Λ₂ from the optical fiber 201 to the optical fiber 205, have a polarization dependency which is controlled respectively.

The light, which is input from the first port 211, is output to the second port 213 and the third port 215 by the half mirror 217 and the reflecting mirrors 219 and 221, which are included in the optical system constituting the Michelson interferometer, as mentioned above. Therefore it is possible to implement the interleaver 210 comprised of an optical system which does not need an optical circulator, so the interleaver 210 which is inexpensive and with a less complex optical system is provided.

### (Fourth Embodiment)

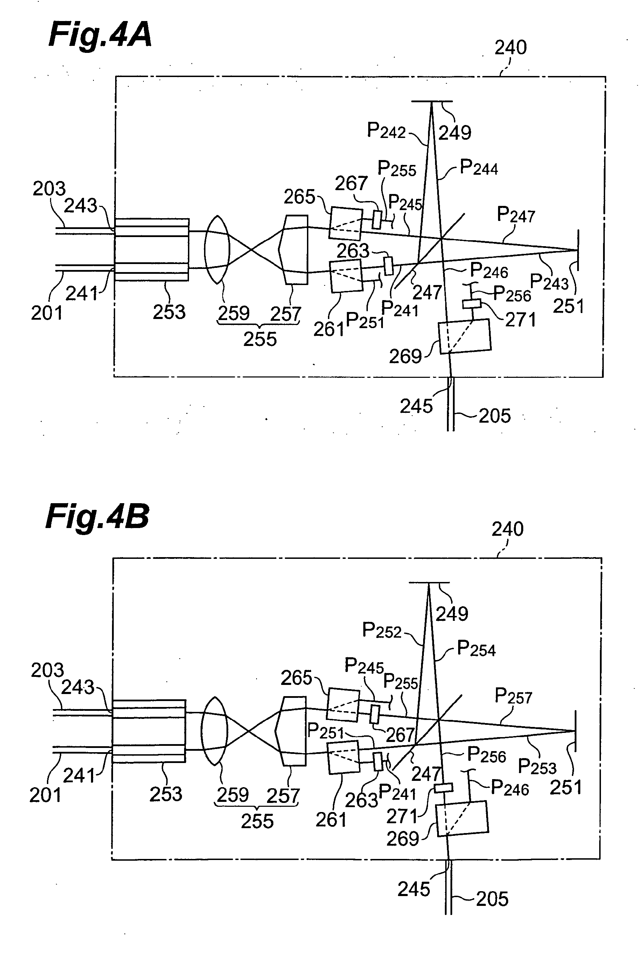

An interleaver according to the fourth embodiment of the present invention will now be described. Figs. 4A and 4B are block diagrams depicting the interleaver 240 according to the present embodiment. The optical system (optical path) shown in Fig. 4A and the optical system (optical path) shown in Fig. 4B are positioned at the top and bottom of each other in a direction vertical to the page face.

The interleaver 240 is comprised of a first port 241, second port 243, third port 245, half mirror 247, first reflecting mirror (total reflection mirror) 249, second reflecting mirror (total reflection mirror) 251, dual collimator 253 and an optical axis correction section 255 (optical axis correction means). The optical system, including the first port 241, second port 243, third port 245, half mirror 247, first reflecting mirror 249 and second reflecting mirror 251, constitutes the Michelson interferometer. In other words, the half mirror 247 branches the light, which reaches from the first port 241, into two, then outputs one light to the first reflecting mirror 249, and outputs the other light to the second reflecting mirror 251. The half mirror 247 also branches the light, which is reflected by the first reflecting mirror 249 and reaches the half mirror 247, into two, then outputs one light to the second port 243, and outputs the other light to the third port 245. The half mirror 247 also branches light, which is reflected by the second reflecting mirror 251 and reaches the half mirror 247, into two, then outputs one light to the second port 243, and outputs the other light to the third port 245.

The first port 241 and the second port 243 are positioned at one end of the dual collimator 253. And the optical axis correction section 255 is installed between the other end of the dual collimator 253 and the half mirror 247. This optical axis correction section 255 parallels the light which is output from the other end of the dual collimator 253 (input optical axis of the first port 241) and the light which is input to the other end of the dual collimator 253 (output optical axis to the second port 243), and includes a prism 257 and a lens 259. The prism 257 and lens 259 are installed in the sequence of the lens 259 and prism 257 viewed from the dual collimator 253 side.

The prism 257 is for converting a state where the light which is output from the other end of the dual collimator 253 and the light which is input to the other end of the dual collimator 253 cross at a predetermined angle (e.g. 0.3°) into a state where the output light and the input light are parallel.

The polarization separation element 261 is comprised of a double refraction material installed between the first port 241 and the half mirror 247, separates the light which reaches from the first port 241 into two lights having polarization planes perpendicular to each other, then outputs one light, that is light with the first polarization component, to the optical path P₂₄₁, and outputs the other light, that is light with the second polarization component, which is perpendicular to the light with the first polarization component, to the optical path P₂₅₁. The optical path P₂₄₁ and the optical path P₂₅₁ are positioned at the top and bottom of each other in a direction vertical to the page face in Figs. 4A and 4B.

The wavelength plate (polarization paralleling element) 263 is installed on the optical path P₂₄₁ between the polarization separation element 261 and the half mirror 247, rotates the polarization plane of the light with the first polarization component, which is output from the polarization separation element 261 to the optical path P₂₄₁, by 90°, and outputs this light as the light with the second polarization component. In other words, this wavelength plate 263 parallels the polarization planes perpendicular to each other, which are output from the polarization separation element 261 to the optical paths P₂₄₁ and P₂₅₁, and outputs the paralleled lights to the half mirror 247 respectively.

As Fig. 4A shows, the light, which is input to the half mirror 247 by the optical path P₂₄₁, is branched into two by the half mirror 247, then one light is output to the optical path P₂₄₂, and the other light is output to the optical path P₂₄₃. The light which is output from the half mirror 247 to the optical path P₂₄₂ is reflected by the first reflecting mirror 249, advances on the optical path P₂₄₄ to return to the half mirror 247, is branched into two by the half mirror 247, then one light is output to the optical path P₂₄₅, and the other light is output to the optical path P₂₄₆. The light which is output from the half mirror 247 to the optical path P₂₄₃ is reflected by the second reflecting mirror 251, advances on the optical path P₂₄₇ to return to the half mirror 247, is branched into two by the half mirror 247, then one light is output to the optical path P₂₄₅, and the other light is output to the optical path P₂₄₆. During this propagation, the light remains as light with the second polarization component.

As Fig. 4B shows, the light, which is input to the half mirror 247 by the optical path P₂₅₁, is branched into two by the half mirror 247, then one light is output to the optical path P₂₅₂, and the other light is output to the optical path P₂₅₃. The light which is output from the half mirror 247 to the optical path P₂₅₂ is reflected by the first reflecting mirror 249, advances on the optical path P₂₅₄ to return to the half mirror 247, is branched into two by the half mirror 247, then one light is output to the optical path P₂₅₅, and the other light is output to the optical path P₂₅₆. The light which is output from the half mirror 247 to the optical path P₂₅₃ is reflected by the second reflecting mirror 251, advances on the optical path P₂₅₇ to return to the half mirror 247, is branched into two by the half mirror 247, then one light is output to the optical path P₂₅₅, and the other light is output to the optical path P₂₅₆. During this propagation, the light remains as light with the second polarization component.

The wavelength plate (polarization plane orthogonalizing element) 267 is installed on the optical path P₂₅₅ between the half mirror 247 and the second port 243, rotates the polarization plane of the light with the second polarization element, which is output from the half mirror 247 to the optical path P₂₅₅, by 90°, and outputs this light as the light with the first polarization component. In other words, this wavelength plate 267 inputs the two lights having polarization planes parallel to each other, which are output from the half mirror 247 to the optical paths P₂₄₅ and P₂₅₅, orthogonalizes the polarization planes of each light, and outputs these orthogonalized lights to the optical axis correction section 255 (second port 243) respectively.

The polarization combining element 265 is comprised of a double refraction material installed between the wavelength plate 267 and the second port 243, inputs the two lights having polarization planes which are orthogonalized by the wavelength plate 267, combines the polarization of these lights, and outputs this light to the optical axis correction section 255 (second port 243).

The wavelength plate (polarization plane orthogonalizing element) 271 is installed on the optical path P₂₅₆ between the half mirror 247 and the third port 245, rotates the polarization plane of the light with the second polarization component, which is output from the half mirror 247 to the optical path P₂₅₆, by 90°, and outputs this light as the light with the first polarization component. In other words, this wavelength plate 271 inputs the two lights having polarization planes parallel to each other, which are output from the half mirror 247 to the optical path P₂₄₆ and P₂₅₆, orthogonalizes the polarization planes of each light, and outputs these orthogonalized lights to the third port 245 respectively.

The polarization combining element 269 is comprised of a double refraction material installed between the wavelength plate 271 and the third port 245, inputs the two lights having polarization planes which are orthogonalized by the wavelength plate 271, combines the polarization of these lights, and outputs this light to the third port 245.

In each optical system constituting the above mentioned Michelson interferometer, the output optical axes from the half mirror 247 to the first reflecting mirror 249 (optical axis of the optical path P₂₄₂ and optical axis of the optical path P₂₅₂) and the reflected optical axes from the first reflecting mirror 249 (optical axis of the optical path P₂₄₄ and optical axis of the optical path P₂₅₅) cross at a predetermined angle greater than 0° (e.g. 0.3°), and the output optical axes from the half mirror 247 to the second reflecting mirror 251 (optical axis of the optical path P₂₄₃ and optical axis of the optical path P₂₅₅) and the reflected optical axes from the second reflecting mirror 251 (optical axis of the optical path P₂₄₇ and optical axis of the optical path P₂₅₇) cross at a predetermined angle greater than 0° (e.g. 0.3°), so that the input optical axis from the first port 241 and the output optical axis to the second port 243 become different when the light is output to the second port 243.

And in each optical system constituting the above mentioned Michelson interferometer, in order to cross the output optical axes from the half mirror 247 to the first reflecting mirror 249 (optical axis of the optical path P₂₄₂ and optical axis of the optical path P₂₅₂) and the reflected optical axis from the first reflecting mirror 249 (optical axis of the optical path P₂₄₄ and optical axis of the optical path P₂₅₅) at the above mentioned predetermined angle, the output optical axes to the first reflecting mirror 249 (optical axis of the optical path P₂₄₂ and optical axis of the optical path P₂₅₂) are set so as to cross with the reflecting face of the first reflecting mirror 249 at a predetermined angle other than 90° (e.g. 89.7°). In the same way, in order to cross the output optical axes from the half mirror 247 to the second reflecting mirror 251 (optical axis of the optical path P₂₄₃ and optical axis of the optical path P₂₅₅) and the reflected optical axes from the second reflecting mirror 251 (optical axis of the optical path P₂₄₇ and optical axis of the optical path P₂₅₇) at the above mentioned predetermined angle, the output optical axes to the second reflecting mirror 251 (optical axis of the optical path P₂₄₃ and optical axis of the optical path P₂₅₅) are set so as to cross with the reflecting face of the second reflecting mirror 251 at a predetermined angle other than 90° (e.g. 89.7°).

Also in each optical system constituting the above mentioned Michelson interferometer, the input axes from the first port 241 to the half mirror 247 (optical axis of the optical path P₂₄₁ and optical axis of the optical path P₂₅₁) are set so as to cross with the branching face of the half mirror 247 at a predetermined angle other than 45° (e.g. 44.7°), and the output axes from the half mirror 247 to the second port 243 and the third port 245 (optical axes of the optical paths P₂₄₅ and P₂₄₆, and optical axes of the optical paths P₂₅₅ and P₂₅₆) are set so as to cross with the branching face of the half mirror 247 at a predetermined angle other than 45° (e.g. 44.7°).

The output optical axes from the half mirror 247 to the second port 243 and the third port 245 (optical axes of the optical paths P₂₄₅ and P₂₄₆ and optical axes of the optical paths P₂₅₅ and P₂₅₆) may be set so as to cross with the half mirror 247 at 45°, and the input optical axes from the first port 241 to the half mirror 247 (optical axis of the optical path P₂₄₁ and optical axis of the optical path P₂₅₁) may be set so as to cross with the branching face of the half mirror 247 at a predetermined angle other than 45°. Also the input optical axes from the first port 241 to the half mirror 247 (optical axis of the optical path P₂₄₁ and optical axis of the optical path P₂₅₁) may be set so as to cross with the half mirror 247 at 45°, and the output optical axes from the half mirror 247 to the second port 243 and the third port 245 (optical axes of the optical paths P₂₄₅ and P₂₄₆ and optical axes of the optical paths P₂₅₅ and P₂₅₆) may be set so as to cross with the branching face of the half mirror 247 at a predetermined angle other than 45° respectively.

This interleaver 210 operates as follows. The light which is input from the optical fiber 201 to the first port 241 is polarization-separated by the polarization separation element 261 via the dual collimator 253 and the optical axis correction section 255 (lens 259 and prism 257), then light with the first polarization component is output to the optical path P₂₄₁, and light with the second polarization component is output to the optical path P₂₅₁. The light with the first polarization component, which is output from the polarization separation element 261 to the optical path P₂₄₁, is converted into the light with the second polarization component by the wavelength plate 263.

The light, which is input from the optical path P₂₄₁ to the half mirror 247, is branched into two by the half mirror 247, and is output to the optical paths P₂₄₂ and P₂₄₃. The light which is output to the optical path P₂₄₂ reaches to and is reflected from the first reflecting mirror 249, and returns to the half mirror 247 by the optical path P₂₄₄. The light, which is input to the half mirror 247 by the optical path P₂₄₄, is branched into two by the half mirror 247, and is output to the optical paths P₂₄₅ and P₂₄₆. The light which is output to the optical path P₂₄₃ reaches to and is reflected from the second reflecting mirror 251, and returns to the half mirror 247 by the optical path P₂₄₇. The light, which is input to the half mirror 247 by the optical path P₂₄₇, is branched into two by the half mirror 247, and is output to the optical paths P₂₄₅ and P₂₄₆. During this propagation, the light remains as light with the second polarization component.

The light, which is input to the half mirror 247 by the optical path P₂₅₁, is branched into two by the half mirror 247, and is output to the optical paths P₂₅₂ and P₂₅₃. The light which is output to the optical path P₂₅₂ reaches to and is reflected from the first reflecting mirror 249, and returns to the half mirror 247 by the optical path P₂₅₄. The light which is input to the half mirror 247 by the optical path P₂₅₄ is branched into two by the half mirror 247, and is output to the optical paths P₂₅₅ and P₂₅₆. The light which is output to the optical path P₂₅₃ reaches to and is reflected from the second reflecting mirror 251, and returns to the half mirror 247 by the optical path P₂₅₇. The light, which is input to the half mirror 247 by the optical path P₂₅₇, is branched into two by the half mirror 247, and is output to the optical paths P₂₅₅ and P₂₅₆. During this propagation, the light remains as the light with the second polarization component.

The light with the secondpolarization component, which is output from the half mirror 247 to the optical path P₂₄₅, is light where lights which reach the half mirror 247 from the optical path P₂₄₄ and the optical path P₂₄₇ respectively are partially super-imposed. The light with the second polarization component, which is output from the half mirror 247 to the optical path P₂₅₅, is light where lights which reach the half mirror 247 by the optical path P₂₅₄ and the optical path P₂₅₇ respectively are partially super-imposed. The light with the second polarization component, which is output from the half mirror 247 to the optical path P₂₅₅, is converted into the light with the first polarization component by the wavelength plate 267. The light on the optical path P₂₅₅, which is converted into the light with the first polarization component by the wavelength plate 267, and the light with the second polarization component which is output from the half mirror 247 to the optical path P₂₄₅, are polarization-combined by the polarization combining element 265. This light, after the polarization combining, is output to the optical fiber 203 via the optical axis correction section 255 and the dual collimator 253.

The light with the secondpolarization component, which is output from the half mirror 247 to the optical path P₂₄₆, is light where lights which reach the half mirror 247 by the optical path P₂₄₄ and the optical path P₂₄₇ respectively are partially super-imposed. The light with the second polarization component, which is output from the half mirror 247 to the optical path P₂₅₆, is light where lights which reach the half mirror 247 by the optical paths P₂₅₄ and P₂₅₇ respectively are super-imposed. The light with the second polarization component, which is output from the half mirror 247 to the optical path P₂₅₆, is converted into light with the first polarization component by the wavelength plate 271. And the light on the optical path P₂₅₆, which is converted into the light with the first polarization component by the wavelength plate 271, and the light with the second polarization component, which is output from the half mirror 247 to the optical path P₂₄₆, are polarization-combined by the polarization combining element 269. This light, after the polarization combining, is output to the optical fiber 205.

In this interleaver 240, the Michelson interferometer comprised of the optical system, which includes the first port 241, second port 243, third port 245, half mirror 247, first reflecting mirror 249 and the second reflecting mirror 251, has a transmission characteristic with a cycle according to the optical path length difference of the two optical paths. Therefore this interleaver 240 can input the signal light with multiband (λ₁, λ₂, - - - , λ₂ₙ₋₁, λ₂ₙ, - - - ) by the optical fiber 201, separate the signal light, output the signal light with the first wavelength group Λ₁ (λ₁, λ₃, - - - , λ₂ₙ₋₁, - - - ) to the optical fiber, and output the signal light with the second wavelength group Λ₂ (λ₂, λ₄, - - - , λ₂ₙ, - - - ) to the optical fiber 205. Here λ₁<λ₂< - - - <λ₂ₙ₋₁<λ₂ₙ< - - - .

The polarization state of the light when entering the half mirror, first reflecting mirror 249 and the second reflecting mirror 251 respectively, is constant, regardless the polarization state of the light which is input from the optical fiber 201. Therefore the transmission characteristic of the light in the first wavelength area Λ₁ from the optical fiber 201 to the optical fiber 203, and the transmission characteristic of the light in the second wavelength area Λ₂ from the optical fiber 201 to the optical fiber 205, have a polarization dependency, which is controlled respectively.

The light, which is input from the first port 241, is output to the second port 243 and the third port 245 by the half mirror 247 and the reflecting mirrors 249 and 251, which are included in the optical system constituting the Michelson interferometer, as mentioned above. Therefore it is possible to implement the interleaver 240 comprised of an optical system which does not need an optical circulator, so the interleaver 240 which is inexpensive and with a less complex optical system is provided.

Also the input optical axis from the first port 241 is paralleled with the output optical axis to the second port 243 by the optical axis correction section 255, so the loss which occurs to the light to be input from the optical fiber 201 to the first port 241 and the light to be output from the second port 243 to the optical fiber 203 can be controlled.

### (Fifth Embodiment)

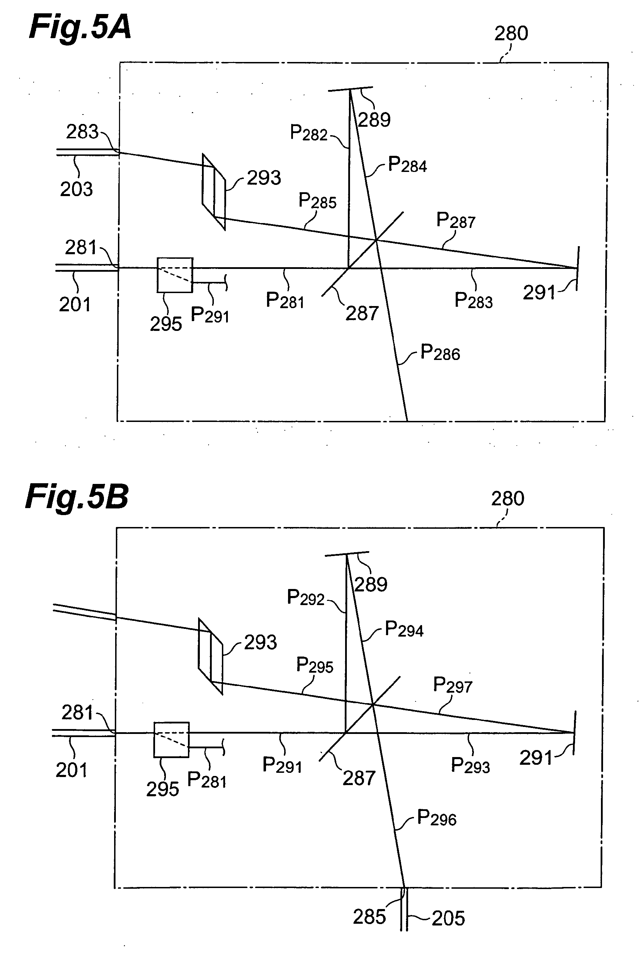

An interleaver according to the fifth embodiment of the present invention will now be described. Figs. 5A and 5B are block diagrams depicting the interleaver 280 according to the present embodiment. The optical system (optical path) shown in Fig. 5A and the optical system (optical path) shown in Fig. 5 B are positioned at the top and bottom of each other in a direction vertical to the page face.

The interleaver 280 is comprised of a first port 281, second port 283, third port 285, half mirror 287, first reflecting mirror (total reflection mirror) 289, second reflecting mirror (total reflection mirror) 291, branching prism 293 and a polarization separation element 295. The optical system, including the first port 281, second port 283, third port 285, half mirror 287, first reflecting mirror 289 and second reflecting mirror 291, constitutes a Michelson interferometer. In other words, the half mirror 287 branches the light, which reaches from the first port 281, into two, then outputs one light to the first reflecting mirror 289, and outputs the other light to the second reflecting mirror 291. The half mirror 287 also branches the light, which is reflected by the first reflecting mirror 289, into two, then outputs one light to the second port 283, and outputs the other light to the third port 285.

The branching prism 293 is installed between the half mirror 287 and the second port 283, and outputs the light from the half mirror 287 to the second port 283 in a state where the space between the input optical axis from the first port 281 and the output optical axis to the second port 283 is spread.

The polarization separation element 295 is comprised of a double refraction material installed between the first port 281 and the half mirror 287, separates the light which reaches from the first port 281 into two lights having polarization planes perpendicular to each other, then outputs one light, that is the light with the first polarization component, to the optical path P₂₈₁, and outputs the other light, that is the light with the second polarization component, which is perpendicular to the light with the first polarization component, to the optical path P₂₉₁. The optical path P₂₈₁ and the optical path P₂₉₁ are positioned at the top and bottom of each other in a direction vertical to the page face in Figs. 3A and 3B.

As Fig. 5A shows, the light, which is input to the half mirror 287 by the optical path P₂₈₁, is branched into two by the half mirror 287, then one light is output to the optical path P₂₈₂, and the other light is output to the optical path P₂₈₃. The light, which is output from the half mirror 287 to the optical path P₂₈₂, is reflected by the first reflecting mirror 289, advances on the optical path P₂₈₄ to return to the half mirror 287, is branched into two by the half mirror 287, then one light is output to the optical path P₂₈₅, and the other light is output to the optical path P₂₈₆. The light, which is output from the half mirror 287 to the optical path P₂₈₃, is reflected by the second reflecting mirror 291, advances on the optical path P₂₈₇ to return to the half mirror 287, is branched into two by the half mirror 287, then one light is output to the optical path P₂₈₅, and the other light is output to the optical path P₂₈₆. The light which is output to the optical path P₂₈₅ is output to the second port 283. During this propagation, the light remains as light with the first polarization component. The light which is output to the optical path P₂₈₆ is dropped.

As Fig. 5B shows, the light, which is input to the half mirror 287 by the optical path P₂₉₁, is branched into two by the half mirror 287, then one light is output to the optical path P₂₉₂, and the other light is output to the optical path P₂₉₃. The light, which is output from the half mirror 287 to the optical path P₂₉₂, is reflected by the first reflecting mirror 289, advances on the optical path P₂₉₄ to return to the half mirror 287, is branched into two by the half mirror 287, then one light is output to the optical path P₂₉₅, and the other light is output to the optical path P₂₉₆. The light, which is output from the half mirror 287 to the optical path P₂₉₃, is reflected by the second reflecting mirror 291, advances on the optical path P₂₉₇ to return to the half mirror 287, is branched into two by the half mirror 287, then one light is output to the optical path P₂₉₅, and the other light is output to the optical path P₂₉₆. The light, which is output to the optical path P₂₉₆, is output to the third port 285. During this propagation, the light remains as light with the second polarization component. The light which is output to the optical path P₂₉₅ is dropped.

In each optical system constituting the above mentioned Michelson interferometer, the output optical axes from the half mirror 287 to the first reflecting mirror 289 (optical axis of the optical path P₂₈₂ and optical axis of the optical path P₂₉₂) and the reflected optical axes from the first reflecting mirror 281 (optical axis of the optical path P₂₈₄ and optical axis of the optical path P₂₉₄) cross at a predetermined angle greater than 0° (e.g. 0.3°), and the output optical axes from the half mirror 287 to the second reflecting mirror 291 (optical axis of the optical path P₂₈₃ and optical axis of the optical path P₂₉₃) and the reflected optical axes from the second reflecting mirror 291 (optical axis of the optical path P₂₈₇ and optical axis of the optical path P₂₉₇) cross at a predetermined angle greater than 0° (e.g. 0.3°), so that the input optical axis from the first port 281 and the output optical axis to the second port 283 become different when the light is output to the second port 283.

And in each optical system constituting the above mentioned Michelson interferometer, in order to cross the output optical axes from the half mirror 287 to the first reflecting mirror 289 (optical axis of the optical path P₂₈₂ and optical axis of the optical path P₂₉₂) and the reflected optical axis from the first reflecting mirror 289 (optical axis of the optical path P₂₈₄ and optical axis of the optical path P₂₉₄) at the above mentioned predetermined angle, the output axes of the first reflecting mirror 289 (optical axis of the optical path P₂₈₂ and optical axis of the optical path P₂₉₂) are set so as to cross with the reflecting face of the first reflecting mirror 289 at a predetermined angle other than 90° (e.g. 89.7°). In the same way, in order to cross the output optical axes from the half mirror 287 to the second reflecting mirror 291 (optical axis of the optical path P₂₈₃ and optical axis of the optical path P₂₉₃) and the reflected optical axis from the second reflecting mirror 291 (optical axis of the optical path P₂₈₇ and optical axis of the optical path P₂₉₇) at the above mentioned predetermined angle, the output optical axes to the second reflecting mirror 291 (optical axis of the optical path P₂₈₃ and optical axis of the optical path P₂₉₃) are set so as to cross with the reflecting face of the second reflecting mirror 291 at a predetermined angle other than 90° (e.g. 89.7°).

Also in each optical system constituting the above mentioned Michelson interferometer, the output optical axes from the half mirror 287 to the second port 283 and the third port 285 (optical axis of the optical path P₂₈₅ and optical axis of the optical path P₂₉₆) are set so as to cross with the branching face of the half mirror 287 at a predetermined angle other than 45° (e.g. 44.7°). And the input axes from the first port 281 to the half mirror 287 (optical axis of the optical path P₂₈₁ and optical axis of the optical path P₂₉₁) are set so as to cross with the branching face of the half mirror 287 at 45°.

The output optical axes from the half mirror 287 to the second port 283 and the third port 285 (optical axis of the optical path P₂₈₅ and optical axis of the optical path P₂₉₆) may be set so as to cross with the half mirror 287 at 45°, and the input optical axes from the first port 281 to the half mirror 287 (optical axis of the optical path P₈₁ and optical axis of the optical path P₂₉₁) may be set so as to cross with the branching face of the half mirror 287 at the above mentioned predetermined angle other than 45°. Also the input optical axes from the first port 281 to the half mirror 287 (optical axis of the optical path P₂₈₁ and optical axis of the optical path P₂₉₁) and the output optical axes from the half mirror 287 to the second port 283 and the third port 285 (optical axis of the optical path P₂₈₅ and optical axis of the optical path P₂₉₆) may be set so as to cross with the branching face of the half mirror 287 at a predetermined angle other than 45° respectively.

This interleaver 280 operates as follows. The light which is input from the optical fiber 201 to the first port 281 is polarization-separated by the polarization separation element 295, then light with the first polarization component is output to the optical path P₂₈₁, and the light with the second polarization component is output to the optical path P₂₉₁.

The light, which is input from the optical path P₂₉₁ to the half mirror 287, is branched into two by the half mirror 287, and is output to the optical paths P₂₈₂ and P₂₈₃. The light which is output to the optical path P₂₈₂ reaches to and is reflected from the first reflecting mirror 289, and returns to the half mirror 287 by the optical path P₂₈₄. The light, which is input to the half mirror 287 by the optical path P₂₈₄, is branched into two by the half mirror 287, and is output to the optical paths P₂₈₅ and P₂₈₆. The light which is output to the optical path P₂₈₃ reaches to and is reflected from the second reflecting mirror 291, and returns to the half mirror 287 by the optical path P₂₈₇. The light, which is input to the half mirror 287 by the optical path P₂₈₇, is branched into two by the half mirror 287, and is output to the optical paths P₂₈₅ and P₂₈₆. During this propagation, the light remains as light with the first polarization component.

The light, which is input to the half mirror 287 by the optical path P₂₉₁, is branched into two by the half mirror 287, and is output to the optical paths P₂₉₂ and P₂₉₃. The light which is output to the optical path P₂₉₂ reaches to and is reflected from the first reflecting mirror 289, and returns to the half mirror 287 by the optical path P₂₉₄. The light, which is input to the half mirror 287 by the optical path P₂₉₄, is branched into two by the half mirror 287, and is output to the optical paths P₂₉₅ and P₂₉₆. The light which is output to the optical path P₂₉₃ reaches to and is reflected from the second reflecting mirror 291, and returns to the half mirror 287 by the optical path P₂₉₇. The light, which is input to the half mirror 287 by the optical path P₂₉₇, is branched into two by the half mirror 287, and is output to the optical paths P₂₉₅ and P₂₉₆. During this propagation, the light remains as light with the second polarization component.

The light with the first polarization component, which is output from the half mirror 287 to the optical path P₂₈₅, is light where lights which reach the half mirror 287 by the optical path P₂₈₄ and the optical path P₂₈₇ respectively are partially super-imposed. The light with the first polarization component, which is output from the half mirror 287 to the optical path P₂₈₅, is output to the optical fiber 203 in a state where the space from the optical path P₂₈₁ (input optical axis) is spread by the branching prism 293.

The light with the second polarization component, which is output from the half mirror 287 to the optical path P₂₉₆, is light where lights which reach the half mirror 287 by the optical path P₂₉₄ and the optical path P₂₉₇ respectively are partially super-imposed. The light with the second polarization component, which is output from the half mirror 287 to the optical path P₂₉₅, is output to the optical fiber 205.

In this interleaver 280, the Michelson interferometer comprised of the optical system, which includes the first port 281, second port 283, third port 285, half mirror 287, first reflecting mirror 289, and the second reflecting mirror 291, has a transmission characteristic with a cycle according to the optical path length difference of the two optical paths. Therefore this interleaver 280 can input the signal light with multiband (λ₁, λ₂, - - - , λ₂ₙ₋₁, λ₂ₙ, - - - ) by the optical fiber 201, separate the signal light, output the signal light with the first wavelength group Λ₁ (λ, λ₂, - - - , _{λ2-1}, - - - ) to the optical fiber 203, and output the signal light with the second wavelength group Λ₂ (λ₂, λ₄, - - - , _{λ2n}, - - - ) to the optical fiber 205. Here λ₁<λ₂< - - - <λ₂ₙ₋₁<λ₂ₙ< - - - .

The optical system constituting the above mentioned Michelson interferometer is configured so as to output one of the two lights having polarization planes perpendicular to each other, which is output from the polarization separation element 295 (light with first polarization component) to the second port 283, and output the other light (light with second polarization component) to the third port 285. Therefore the interleaver 280 is a polarization interleaver.

Also the light which is output from the first port 281 is output to the second port 283 and the third port 285 by the half mirror 287 and the reflecting mirrors 289 and 291, which are included in the optical system constituting the Michelson interferometer. Therefore an interleaver with an optical system which does not need an optical circulator can be implemented, so the interleaver which is inexpensive and with a less complex optical system is provided.

### (Sixth Embodiment)

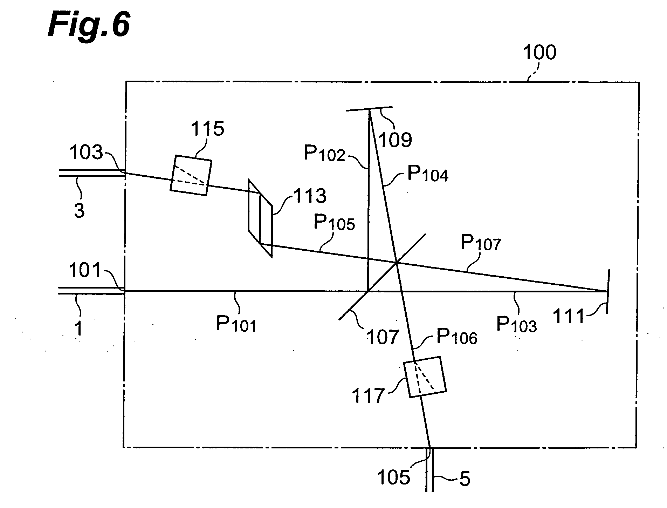

An interleaver according to the sixth embodiment of the present invention will now be described. Fig. 6 is a block diagram depicting the interleaver 100 according to the present embodiment.

The interleaver 100 is comprised of a first port 101, second port 103, third port 105, half mirror 107, first reflecting mirror (total reflection mirror) 109, second reflecting mirror (total reflection mirror) 111, branching prism 113, polarization separation element 115, and polarization separation element 117. The optical system, including the first port 101, second port 103, third port 105, half mirror 107, first reflecting mirror 109, and second reflecting mirror 111, constitutes a Michelson interferometer. In other words, the half mirror 107 branches the light which reaches from the first port 101, into two, then outputs one light to the first reflecting mirror 109, and outputs the other light to the second reflecting mirror 111. The half mirror 107 also branches the light, which is reflected by the first reflecting mirror 109, into two, then outputs one light to the second port 103, and outputs the other light to the third port 105. The half mirror 107 also branches the light, which is reflected by the second reflecting mirror 111, into two, then outputs one light to the second port 103, and outputs the other light to the third port 105.

The branching prism 113 is installed between the half mirror 107 and the second port 103, and outputs the light from the half mirror 107 to the second port 103 in a state where the space between the input optical axis from the first port 101 and the output optical axis to the second port 103 is spread.

As Fig. 6 shows, the light, which is input from the optical path P₁₀₁ to the half mirror 107, is branched into two by the half mirror 107, then one light is output to the optical path P₁₀₂, and the other light is output to the optical path P₁₀₃. The light, which is output from the half mirror 107 to the optical path P₁₀₂, is reflected by the first reflecting mirror 109, advances on the optical path P₁₀₄ to return to the half mirror 107, is branched into two by the half mirror 107, then one light is output to the optical path P₁₀₅, and the other light is output to the optical path P₁₀₆. The light, which is output from the half mirror 107 to the optical path P₁₀₃, is reflectedby the second reflecting mirror 111, advances on the optical path P₁₀₇ to return to the half mirror 107, is branched into two by the half mirror 107, then one light is output to the optical path P₁₀₅, and the other light is output to the optical path P₁₀₆.

The polarization separation element 115 is comprised of a double refraction material installed between the half mirror 107 and the second port 103, separates the light which reaches from the half mirror 107 into two lights having polarization planes perpendicular to each other, then outputs one light, that is the light with the first polarization component, to the second port. 103.

The polarization separation element 117 is comprised of a double refraction material installed between the half mirror 107 and the third port 105, separates the light which reaches from the half mirror 107 into two lights having polarization planes perpendicular to each other, then outputs one light, that is light with the second polarization component which has a polarization plane perpendicular to the polarization plane of the light to be output to the second port 103 (light with the first polarization component), to the third port 105.

In the optical system constituting the above mentioned Michelson interferometer, the output optical axis from the half mirror 107 to the first reflecting mirror 109 (optical axis of the optical path P₁₀₂) and the reflected optical axis from the first reflecting mirror 109 (optical axis of optical path P₁₀₄) cross at a predetermined angle greater than 0° (e.g. 0.3°), and the output optical axis from the half mirror 107 to the second reflecting mirror 111 (optical axis of the optical path P₁₀₃) and the reflected optical axis from the second reflecting mirror 111 (optical axis of optical path P₁₀₇) cross at a predetermined angle greater than 0° (e.g. 0.3°), so that the input optical axis from the first port 101 and the output optical axis to the second port 103 become different when the light is output to the second port 103.

Also in the optical system constituting the above mentioned Michelson interferometer, in order to cross the output optical axis from the half mirror 107 to the first reflecting mirror 109 (optical axis of the optical path P₁₀₂) and the reflected optical axis from the first reflecting mirror 109 (optical axis of the optical path P₁₀₄) at the above mentioned predetermined angle, the output optical axis to the first reflecting mirror 109 (optical axis of the optical path P₁₀₂) is set so as to cross with the reflecting face of the first reflecting mirror 109 at a predetermined angle other than 90° (e.g. 89.7°). In the same way, in order to cross the output optical axis from the half mirror 107 to the second reflecting mirror 111 (optical axis of the optical path P₁₀₃) and the reflected optical axis from the second reflecting mirror 111 (optical axis of the optical path P₁₀₇) at the above mentioned predetermined angle, the output optical axis to the second reflecting mirror 111 (optical axis of the optical path P₁₀₃) is set so as to cross with the reflecting face of the second reflecting mirror 111 at a predetermined angle other than 90° (e.g. 89.7°).

Also in the optical system constituting the above mentioned Michelson interferometer, the output optical axes from the half mirror 107 to the second port 103 and the third port 105 (optical axes of the optical paths P₁₀₅ and P₁₀₆) are set so as to cross with the branching face of the half mirror 107 at a predetermined angle other than 45° (e.g. 44.7°). And the input optical axis from the first port 101 to the half mirror 107 (optical axis of the optical path P₁₀₁) is set so as to cross with the branching face of the half mirror 107 at 45°.

The output optical axes from the half mirror 107 to the second port 103 and the third port 105 (optical axes of the optical paths P₁₀₅ and P₁₀₆) may be set so as to cross with the half mirror 107 at 45°, and the input optical axis from the first port 101 to the half mirror 107 (optical axis of the optical path P₁₀₁) may be set so as to cross with the branching face of the half mirror 107 at the above mentioned predetermined angle other than 45°. Also the input optical axis from the first port 101 to the half mirror 107 (optical axis of the optical path P₁₀₁) and the output optical axes from the half mirror 107 to the second port 103 and the third port 105 (optical axes of the optical paths P₁₀₅ and P₁₀₆) may be set so as to cross with the branching face of the half mirror 107 at a predetermined angle other than 45° respectively.

This interleaver 100 operates as follows. The light, which is input to the first port 101 by the optical fiber 1, is output to the optical path P₁₀₁. The light, which is input to the half mirror 107 by the optical path P₁₀₁, is branched into two by the half mirror 107, and is output to the optical paths P₁₀₂ and P₁₀₃, respectively. The light, which is output to the optical path P₁₀₂ reaches to and is reflected from the first reflecting mirror 109, and returns to the half mirror 107 by the optical path P₁₀₄. The light, which is input to the half mirror 107 by the optical path P₁₀₄, is branched into two by the half mirror 107, and is output to the optical paths P₁₀₅ and P₁₀₆. The light, which is output to the optical path P₁₀₃, reaches to and is reflected from the second reflecting light 111, and returns to the half mirror 107 by the optical path P₁₀₇. The light, which is input to the half mirror 107 by the optical path P₁₀₇, is branched into two by the half mirror 107, and is output to the optical paths P₁₀₅ and P₁₀₆.

The light, which is output from the half mirror 107 to the optical path P₁₀₅, is light where lights which reach the half mirror 107 from the optical path P₁₀₄ and optical path P₁₀₇ respectively are partially super-imposed, and is polarization-separated by the polarization separation element 115. The light with the first polarization component out of the polarization-separated lights is output to the optical fiber 3 by the branching prism 113 in a state where the space from the optical path P₁₀₁ (input optical axis) is spread.

The light, which is output from the half mirror 107 to the optical path P₁₀₆, is also light where the lights which reach the half mirror 107 by the optical path P₁₀₄ and optical path P₁₀₇ respectively are partially super-imposed, and is polarization-separated by the polarization separation element 117. The light with the second polarization component out of the polarization-separated lights is output to the optical fiber 5.

In this interleaver 100, the Michelson interferometer comprised of the optical system, which includes the first port 101, second port 103, third port 105, half mirror 107, first reflecting mirror 109, and the second reflectingmirror 111, has a transmission characteristic with a cycle according to the optical path length difference of the two optical paths. Therefore this interleaver 100 can input the signal light with multiband (λ₁, λ₂, - - - , λ₂ₙ₋₁, λ₂ₙ, - - - ) from the optical fiber 1, separate the signal light, output the signal light with the first wavelength group Λ₁ (λ₁, λ₃, - - - , λ₂ₙ₋₁, - - - ) to the optical fiber 3, and output the signal light with the second wavelength group Λ₂ (λ₂, λ₄, - - - , λ₂ₙ, - - - ) to the optical fiber 5. Here λ₁<λ₂< - - - <λ₂ₙ₋₁<λ₂ₙ< - - - .

The optical system constituting the above mentioned Michelson interferometer is configured so as to output one of the two lights having polarization planes perpendicular to each other which is output from the polarization separation element 115 (light with the first polarization component) to the second port 103, and output the other light, out of the two lights having polarization planes perpendicular to each other which is output from the polarization separation element 117 (light with the second polarization component), to the third port 105. Therefore the interleaver 100 is a polarization interleaver.

Also the light which is input from the first port 101 is output to the second port 103 and the third port 105 by the half mirror 107 and the reflecting mirrors 109 and 111, which are included in the optical system constituting the Michelson interferometer. Therefore the interleaver 100 with an optical system which does not need an optical circulator can be implemented, so the interleaver 100 which is inexpensive and with a less complex optical system is provided.

The present invention is not limited by the above embodiment, but various modifications are possible. For example, in the above mentioned embodiments, a Gires-Tournois resonator, which includes a semi-transparent mirror, which transmittance is several tens %, and a total reflection mirror, may be used as one reflecting mirror.

In the third to fifth embodiment, the half mirror 217, 247 or 287, and each reflecting mirror 219 and 221, 249 and 251, or 289 and 291, maybe installed independently for each of the respective optical systems which are installed at the top and bottom of each other.

As described above, in the present invention, the light which is input from the first port is output to the second port and to the third port by the half mirror and the reflecting mirrors which are included in the optical system constituting the Michelson interferometer. Therefore according to the present invention, it is possible to implement an optical system which does not need an optical circulator, and an interleaver which is inexpensive, and with a less complex optical system can be provided.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An interleaver comprising:
an optical system having a first port, a second port, a third port, a half mirror, a first reflecting mirror and a second reflecting mirror,
wherein light which reaches from said first port to said half mirror is branched into two, and these lights are output to said first reflecting mirror and said second reflecting mirror respectively;
wherein light which is reflected by said first reflecting mirror and reach said half mirror is branched into two, and these lights are output to said second port and said third port respectively; and
wherein light which is reflected by the second reflecting mirror and reach said half mirror is branched into two, and these lights are output to said second port and said third port respectively.

2. The interleaver according to Claim 1, wherein in said optical system, the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

3. The interleaver according to Claim 1, wherein in said optical system, the input optical axis from said first port to said half mirror and at least one of the output optical axes from said half mirror to said second port and said third port cross with the branching face of said half mirror at a predetermined angle other than 45°, so that the output optical axis from said half mirror to said first reflecting mirror and the reflected optical axis from said first reflecting mirror cross at an angle greater than 0°, and the output optical axis from said half mirror to said second reflecting mirror and the reflected optical axis from said second reflecting mirror cross at a predetermined angle greater than 0°.

4. The interleaver according to Claim 1,
wherein in said optical system, said output optical axis to said first reflectingmirror cross with the reflecting face of said first reflecting mirror at a predetermined angle other than 90°, and said output optical axis to said second reflecting mirror cross with the reflecting face of said second reflecting mirror at a predetermined angle other than 90°, so that the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

5. The interleaver according to Claim 1,
wherein in said optical system, the input optical axis from said first port to said half mirror and at least one of the output optical axes from said half mirror to said second port and said third port cross with the branching face of said half mirror at a predetermined angle other than 45°, said output optical axis to said first reflecting mirror crosses with the reflecting face of said first reflecting mirror at a predetermined angle other than 90°, and the output optical axis to said second reflecting mirror crosses with the reflecting face of said second reflecting mirror at a predetermined angle other than 90°.

6. The interleaver according to one of Claims 1, further comprising optical axis correction means for paralleling the input optical axis from said first port and the output optical axis to said second port.

7. The interleaver according to Claim 6, wherein said optical axis correction means comprises a prism for converting a state where said input optical axis from said first port and said output optical axis to said second port cross at a predetermined angle into a state where said input optical axis and said output optical axis are parallel.

8. An interleaver according to claim 1, further comprising:
a polarization separation element which is installed between said first port and said half mirror of said optical system for separating light which reaches from said first port into two lights having polarization planes perpendicular to each other and outputting the separated lights to different optical paths respectively.

9. The interleaver according to Claim 8, further comprising a polarization plane paralleling element which is installed between said polarization separation element and said half mirror of said optical system, inputs two lights which are output from said polarization separation element and have polarization planes perpendicular to each other, parallels the polarization planes of the respective lights, and outputs these paralleled lights to said half mirror respectively.

10. The interleaver according to Claim 9, further comprising a polarization orthogonalizing element which is installed between said half mirror and said second port of said optical system, inputs two lights which reach from said half mirror and have polarization planes parallel to each other, orthogonalizes the polarization planes of the respective lights, and outputs the orthogonalized lights to said second port respectively.

11. The interleaver according to Claim 10, further comprising a polarization combining element which is installed between said polarization plane orthogonalizing element and said second port of said optical system, inputs two lights which are output from said polarization plane orthogonalizing element and have the polarization planes perpendicular to each other, combines these two lights and outputs them to said second port.

12. The interleaver according to Claim 9, further comprising a polarization plane orthogonalizing element which is installed between said half mirror and said third port of said optical system, inputs two lights which reach from said half mirror and have polarization planes parallel to each other, orthogonalizes the polarization planes of the respective lights, and outputs the orthogonalized lights to said third port respectively.

13. The interleaver according to Claim 12, further comprising a polarization combining element which is installed between said polarization plane orthogonalizing element and said third port of said optical system, inputs two lights which are output from said polarization plane orthogonalizing element and have the polarization planes perpendicular to each other, combines these two lights and outputs them to said third port.

14. The interleaver according to Claim 8, wherein said optical system outputs one of the two lights which are output from said polarization separation element and have polarization planes perpendicular to each other to said second port, and outputs the other light to said third port.

15. An interleaver comprising according to claim 1, further comprising a polarization separation element which is installed between said second port and said half mirror of said optical system for separating light which reaches from said half mirror into two lights having polarization planes perpendicular to each other, and outputting one of the separated lights to said second port; and
a polarization separation element which is installed between said third port and said half mirror of said optical system for separating light which reaches from said half mirror into two lights having polarization planes perpendicular to each other, and outputting the light, having a polarization plane which is perpendicular to the polarization plane of the light to be output to said second port, to said third port.

16. The interleaver according to one of Claim 8, wherein in said optical system, the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

17. The interleaver according to one of Claim 8, wherein in said optical system, the input optical axis from said first port to said half mirror and at least one of the output optical axes from said half mirror to said second port and said third port cross with the branching face of said half mirror at a predetermined angle other than 45°, so that the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

18. The interleaver according to one of Claim 8, wherein in said optical system, said output optical axis to said first reflecting mirror crosses with the reflecting face of said first reflecting mirror at a predetermined angle other than 90°, and said output optical axis to said second reflecting mirror crosses with the reflecting face of said second reflecting mirror at a predetermined angle other than 90°, so that the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

19. The interleaver according to one of Claim 8, wherein in said optical system, the input optical axis from said first port to said half mirror and at least one of the output optical axes from said half mirror to said second port and said third port cross with the branching face of said half mirror at a predetermined angle other than 45°, said output optical axis to said first reflecting mirror crosses with the reflecting face of said first reflecting mirror at a predetermined angle other than 90°, and the output optical axis to said second reflecting mirror crosses with the reflecting face of said second reflecting mirror at a predetermined angle other than 90°, so that the output optical axis from said half mirror to said first reflecting mirror and the reflected optical axis from said first reflecting mirror cross at a predetermined angle greater than 0°, and the output optical axis from said half mirror to said second reflecting mirror and the reflected optical axis from said second reflecting mirror cross at a predetermined angle greater than 0°.

20. The interleaver according to one of Claim 8, further comprising an optical axis correction means for paralleling the input optical axis from said first port and the output optical axis to said second port.

21. The interleaver according to Claim 20, wherein said optical axis correction means comprises a prism for converting a state where said input optical axis from said first port and said output optical axis to said second port cross at a predetermined angel into a state where said input optical axis and said output optical axis are parallel.
